# FASCICULE DE BREVET EUROPEEN

(11) **EP 2 391 542 B1**
(45) Date de publication et mention de la délivrance du brevet: **30.07.2014**
(21) Numéro de dépôt: 10707610.1
(22) Date de dépôt: 28.01.2010
(51) Int. Cl.: B64D 15/04, B64D 33/02

(54) **NACELLE D'AERONEF COMPRENANT UN SYSTEME DE TRAITEMENT ACOUSTIQUE OPTIMISE**
TRIEBWERKSVERKLEIDUNG MIT LÄRMSCHUTZVORRICHTUNG
ENGINE NACELLE HAVING A NOISE REDUCING STRUCTURE

(30) Priorité: 02.02.2009 FR 0950634; 05.11.2009 FR 0957820
(43) Date de publication de la demande: 07.12.2011
(73) Titulaire: Airbus Operations (S.A.S.), 31060 Toulouse (FR)
(72) Inventeur: CHELIN, Frédéric, 32430 Encausse (FR); PORTE, Alain, 31770 Colomiers (FR); GANTIE, Fabrice, 31000 Toulouse (FR); LALANE, Jacques, 31650 Saint Orens de Gameville (FR)
(74) Mandataire: Fantin, Laurent
(86) Numéro de dépôt international: PCT/FR2010/050137
(87) Numéro de publication internationale: WO 2010/086560

(56) Documents cités:
- EP-A2- 1 495 963
- WO-A-94/18072
- WO-A-2006/136748
- FR-A- 2 014 140
- FR-A- 2 637 251
- FR-A- 2 840 879
- FR-A- 2 917 067

## Description

La présente invention se rapporte à une nacelle d'aéronef comprenant un système de traitement acoustique optimisé.

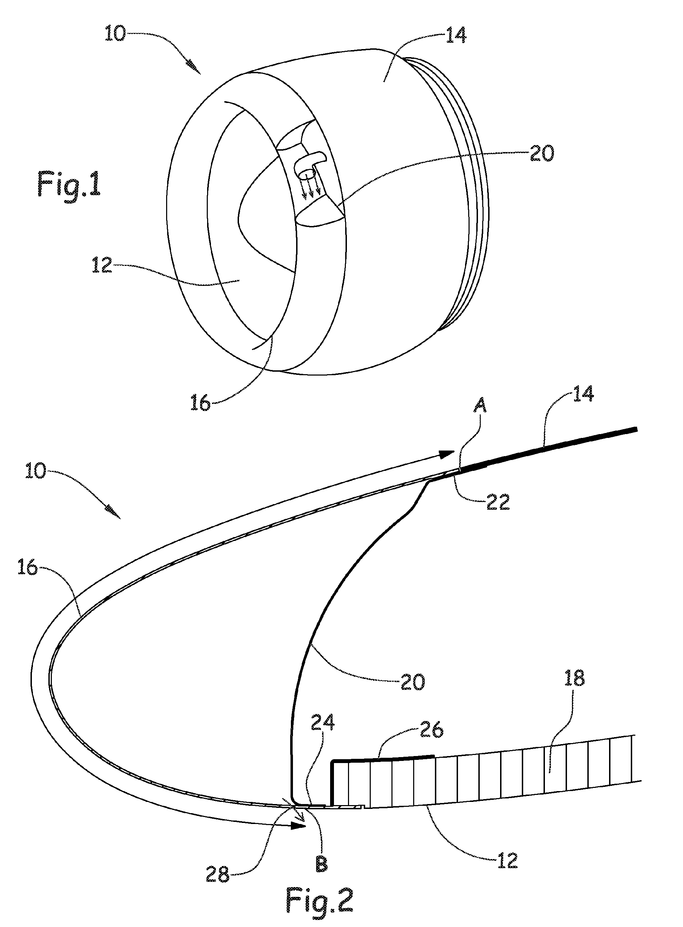

Selon un mode de réalisation illustré sur les figures 1 et 2, une nacelle 10 comprend au moins un conduit 12, une paroi périphérique 14, et à l'avant, une entrée d'air délimitée par une lèvre 16 qui relie le conduit 12 et la paroi périphérique 14.

De manière connue, le conduit 12 comporte un revêtement 18 pour le traitement acoustique comprenant de l'extérieur vers l'intérieur, une couche poreuse acoustiquement résistive, une structure alvéolaire et une couche réflectrice imperméable aux ondes sonores. Généralement, le revêtement 18 est réalisé en matériau composite pour ne pas trop augmenter la masse embarquée.

Pour être efficace, le traitement acoustique doit intervenir sur une surface la plus importante possible et par conséquent s'étend vers la lèvre.

Or, la zone de la lèvre doit également comprendre un traitement du givre.

Les systèmes permettant d'éviter la formation et/ou l'accumulation de glace et/ou de givre sont divisés en deux grandes familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé(s). Pour la suite de la description, on entend par système ou procédé de traitement du givre, un système ou un procédé anti-givrant ou un système ou un procédé dégivrant.

La présente invention se rapporte plus particulièrement à un procédé de traitement du givre consistant à utiliser de l'air chaud prélevé au niveau du moteur et refoulé au niveau de la paroi interne des bords d'attaque.

Pour assurer le fonctionnement de l'aéronef, le traitement du givre doit être réalisé depuis un point A disposé au niveau de la paroi périphérique 14 jusqu'à un point B prévu au niveau du conduit 12. A cet effet, un cadre avant 20 est prévu, comprenant une zone de jonction avec la paroi périphérique 14 au niveau du point A et une zone de jonction avec le conduit au niveau du point B.

Selon un mode de réalisation, pour assurer la liaison entre le panneau formant la lèvre 16 et le panneau formant la paroi périphérique 14, les bords desdits panneaux sont plaqués puis fixés par tous moyens appropriés contre un rebord 22 du cadre avant 20.

Selon un mode de réalisation, pour assurer la liaison entre le panneau formant la lèvre 16 et l'un des panneaux délimitant le conduit 12, les bords desdits panneaux sont chevauchants et maintenus plaqués l'un contre l'autre par tous moyens appropriés. Comme illustré sur la figure 2, le cadre avant 20 comprend un rebord 24 contre lequel est plaquée et fixée par tous moyens appropriés la face intérieure du panneau de la lèvre.

Le cadre avant 20 et la lèvre 16 définissent un conduit avec une section en forme de D inversé qui s'étend sur toute la circonférence de la nacelle et dans lequel circule l'air chaud, la position du cadre avant 20 dépendant de la zone de traitement du givre qui s'étend entre les points A et B.

Cet agencement ne donne pas satisfaction pour les raisons suivantes.

Cette position du cadre avant 20 génère un conduit pour l'air chaud avec un volume important qui nécessite un débit important en air chaud au moment du dégivrage. Or, le traitement du givre peut être réalisé au moment de certaines phases du vol lors desquelles la motorisation fonctionne avec un faible régime, ne permettant pas de générer un débit d'air chaud suffisant pour optimiser le traitement du givre.

Selon un autre inconvénient, dans cette position le cadre avant est sensiblement perpendiculaire à la direction d'un impact d'oiseau. Aussi, pour résister à un tel impact, le cadre avant doit être renforcé par exemple en augmentant son épaisseur ou le nombre de renforts ce qui conduit à augmenter la masse embarquée et donc la consommation énergétique de l'aéronef.

Selon une autre contrainte, le système pour le traitement du givre doit être compatible avec un système pour le traitement acoustique obtenu à partir d'éléments en matériau composite.

Le cadre avant 20 métallique émettant un rayonnement thermique, il est nécessaire de protéger le revêtement 18 pour le traitement acoustique en le recouvrant d'un film ou d'une peinture 26 en un matériau peu conducteur. Cependant, la température de l'air chaud utilisé augmentant, ce film 26 ne suffit plus si bien qu'il est nécessaire d'éloigner le revêtement 18 du cadre avant 20 ce qui tend à réduire la surface traitée sur le plan acoustique.

Selon, une autre contrainte illustrée sur la figure 2, l'air chaud utilisé pour le traitement du givre peut être refoulé dans le conduit 12 au niveau d'une sortie circonférentielle 28 prévue à proximité du rebord 24.

Une certaine distance est indispensable entre ladite sortie 28 et le revêtement 18 pour que l'air chaud ne brûle pas la couche externe du revêtement 18 pour le traitement acoustique en matériau composite.

Comme précédemment, la température de l'air chaud utilisé augmentant, il est nécessaire d'éloigner de manière plus importante le revêtement 18 pour le traitement acoustique en matériau composite de la sortie circonférentielle 28 ce qui tend à réduire la surface traitée sur le plan acoustique.

Le document FR-2.840.879 propose une entrée d'air avec un traitement du givre utilisant de l'air chaud intégrant une sortie d'air chaud disposée au niveau du cadre avant, délimitée par deux cornières, l'une avec une partie recourbée vers l'avant assurant une liaison avec la paroi de l'entrée d'air et l'autre avec une partie recourbée vers l'arrière assurant la liaison avec un panneau acoustique délimitant un conduit. Même si l'une des cornières recouvre et protège un peu le panneau acoustique afin qu'il ne soit pas brûlé par l'air chaud évacué, ce document ne prévoit aucun élément visant à protéger le panneau acoustique des rayonnements du cadre avant si bien qu'il est nécessaire d'éloigner du cadre avant le panneau acoustique s'il est réalisé en matériau composite pour le protéger.

Aussi, la présente invention vise à pallier aux inconvénients de l'art antérieur en proposant une nacelle dont la conception est optimisée sur le plan des traitements acoustique et du givre.

A cet effet, l'invention a pour objet une nacelle d'aéronef comprenant un conduit, une paroi périphérique, une lèvre et un cadre avant reliant la paroi périphérique et le conduit et formant avec la lèvre un espace dans lequel peut circuler de l'air chaud prévu pour le traitement du givre, le conduit comportant un revêtement pour le traitement acoustique en matériau composite, caractérisée en ce que la nacelle comprend au moins un élément en un matériau conducteur de la chaleur intercalé entre la lèvre et le conduit assurant la continuité des surfaces aérodynamiques de la lèvre et du conduit et la propagation de la chaleur par conduction depuis l'espace vers l'arrière de la nacelle, ledit élément comportant une première partie assurant la fonction mécanique et reliant la lèvre, le cadre avant et le conduit et une seconde partie dissociable de la première partie assurant la fonction du traitement acoustique en un matériau résistant à la chaleur.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle,
- la figure 2 est une coupe de l'avant d'une nacelle selon l'art antérieur,
- la figure 3 est une coupe de l'avant d'une nacelle d'aéronef selon l'invention,
- les figures 4 à 6 sont des coupes illustrant en détails différentes variantes d'un élément de liaison entre un cadre avant et un conduit comportant un panneau pour le traitement acoustique,
- la figure 7 est une coupe illustrant une variante améliorée d'un élément de liaison entre un cadre avant et un conduit comportant un revêtement pour le traitement acoustique,
- la figure 8 est une coupe illustrant une variante améliorée d'un élément de liaison entre un cadre avant et un conduit dont le revêtement pour le traitement acoustique de l'élément de liaison a été retiré, et
- la figure 9 est une vue en perspective d'une partie de l'élément de liaison du panneau acoustique.

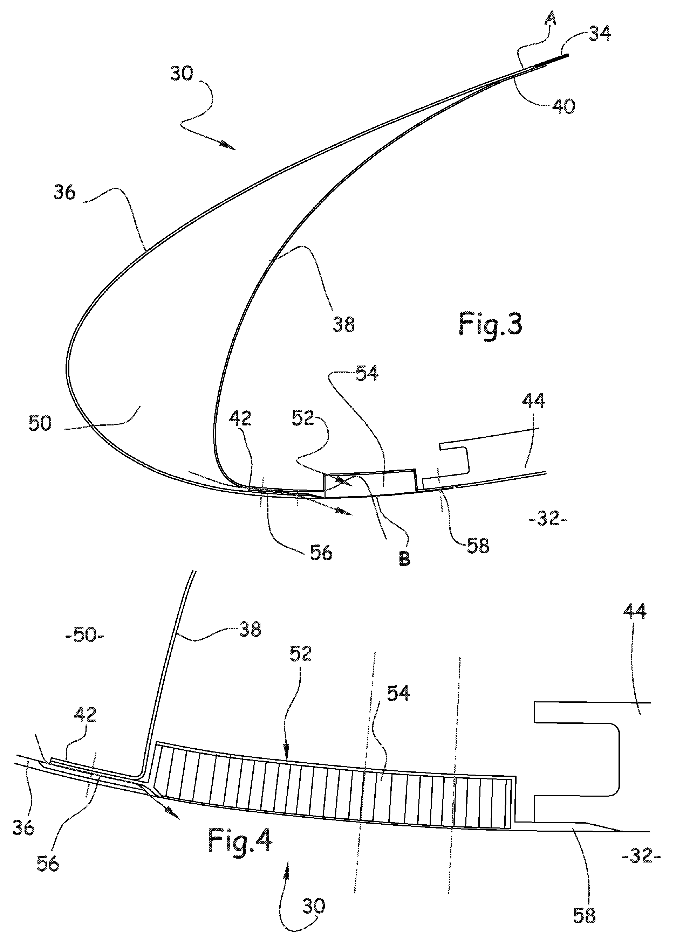

Sur les figures 3 à 7, on a représenté en 30 une nacelle comprenant un conduit 32, une paroi périphérique 34 ainsi qu'une lèvre 36 à l'avant reliant ledit conduit 32 et ladite paroi périphérique 34 et délimitant une entrée d'air. Les autres éléments de la nacelle ne sont pas décrits car ils sont connus de l'homme du métier.

Généralement, la paroi du conduit (ou de la lèvre) est obtenue par l'assemblage de plusieurs panneaux, de plusieurs plaques, de plusieurs peaux ou analogues. Pour la suite de la description, toutes ces formes de paroi seront désignées par le terme panneau.

La structure de la nacelle 30 comprend un cadre avant 38 reliant la paroi périphérique 34 et le conduit 32, et supportant la lèvre 36.

Au niveau d'un premier bord, le cadre avant 38 peut comprendre une surface d'appui 40 au niveau de laquelle sont solidarisées la paroi périphérique 34 et/ou la lèvre 36.

Selon un mode de réalisation, pour réduire l'influence sur la traînée, les panneaux de la surface périphérique et de la lèvre sont mis bout à bout et ne se chevauchent pas et sont tous les deux solidarisés à la surface d'appui 40.

Au niveau d'un second bord, le cadre avant 38 peut comprendre une surface d'appui 42 au niveau de laquelle sont solidarisés le conduit 32 et/ou la lèvre 36.

Afin de réduire les nuisances sonores, le conduit 32 comprend un revêtement 44 pour le traitement acoustique en matériau composite, comportant de l'intérieur vers l'extérieur, une couche réflectrice acoustique, au moins une structure alvéolaire et au moins une structure acoustiquement résistive. Le revêtement pour le traitement acoustique n'est pas détaillé car il est également connu de l'homme du métier. Pour limiter la masse embarquée, les éléments formant le revêtement acoustique sont en matériau composite.

La nacelle comprend également un système de traitement du givre au niveau de la lèvre 36 qui doit couvrir une zone qui s'étend selon une section longitudinale d'un point A prévu au niveau de la paroi périphérique 34 à un point B prévu au niveau du conduit 32.

La présente invention se rapporte aux nacelles intégrant un système de traitement du givre par air chaud. Des moyens sont prévus pour insuffler de l'air chaud à l'intérieur de la lèvre afin que ce dernier en contact avec la surface intérieure de la lèvre empêche la formation de givre ou son accumulation au niveau de la surface extérieure de la lèvre.

Selon un mode de réalisation, l'air chaud est prélevé au niveau de la motorisation et des canalisations sont prévues pour l'acheminer dans l'espace 50 délimité par le cadre avant 38 et la lèvre 36 qui forme un conduit circonférentiel. Ces différents éléments ne sont pas plus décrits car ils sont connus de l'homme du métier.

Selon l'invention, la zone de jonction du cadre avant 38 avec la lèvre 36 au niveau de l'entrée d'air de la nacelle est décalée vers l'avant de la nacelle par rapport au point B, et au moins un élément 52 en un matériau conducteur de la chaleur intercalé entre la lèvre 36 et le conduit 32 assure la continuité des surfaces aérodynamiques de la lèvre 36 et du conduit 32 et la propagation de la chaleur depuis l'espace 50 vers l'arrière de la nacelle de manière à ce que la zone allant du point A au point B soit traitée sur le plan du givre.

Cette solution permet d'éloigner l'air chaud de l'espace 50 et le cadre avant 38 du revêtement acoustique 44 en matériau composite.

L'élément 52 assure la propagation de la chaleur depuis l'espace 50 vers l'arrière de la nacelle ce qui permet d'étendre le traitement du givre au-delà de la zone de jonction du cadre avant 38 et de la lèvre 36. Toutefois, cet élément 52 étant en contact avec le flux d'air entrant dans la nacelle, il se refroidit progressivement si bien qu'il existe un gradient de température entre la zone de jonction dudit élément 52 avec la lèvre 36 et la zone de jonction dudit élément 52 avec le conduit 32. Ainsi, la température de l'élément 52 au niveau de sa zone de jonction avec le conduit 32 est compatible avec le revêtement 44 pour le traitement acoustique en matériau composite. La propagation du traitement du givre au-delà du cadre avant 30 en direction de l'arrière de la nacelle découle de la propagation de la chaleur par conduction au travers de l'élément 52.

Selon un autre avantage de l'invention, le fait de décaler la zone de jonction entre le cadre avant 38 et la lèvre 36 vers l'avant de la nacelle permet de réduire le volume de l'espace 50 et donc le débit nécessaire en air chaud. Ainsi, cet agencement permet d'étendre le traitement du givre intervenant lors de certaines phases du vol lors desquelles la motorisation fonctionne à faible régime et ne délivre qu'un débit réduit d'air chaud.

Selon un autre avantage, le cadre avant est plus incliné par rapport à l'art antérieur ce qui renforce sa résistance aux chocs d'oiseaux, contribuant ainsi à optimiser sa masse.

Selon une autre caractéristique de l'invention illustrée sur les figures 4 à 7, l'élément 52 comprend un revêtement 54 pour le traitement acoustique en un matériau métallique résistant à la chaleur.

Cet agencement permet d'optimiser le traitement acoustique en augmentant la surface traitée.

Ce revêtement comprend de l'intérieur vers l'extérieur, une couche réflectrice acoustique, au moins une structure alvéolaire et au moins une structure acoustiquement résistive, cette dernière formant la surface en contact avec le flux d'air entrant dans la nacelle.

Selon l'invention, le système pour le traitement acoustique comprend deux parties, une première partie en matériau composite et une seconde partie en un matériau résistant à la chaleur intercalé entre la première partie et l'espace 50 prévu pour l'air chaud du traitement du givre. Cet agencement permet d'optimiser le traitement acoustique dans la mesure où la surface traitée est augmentée tout en le rendant compatible avec le traitement du givre et en limitant la masse embarquée.

De préférence, des moyens pour empêcher l'air chaud de pénétrer dans les cellules de la structure alvéolaire sont prévus pour que le traitement acoustique ne soit pas affecté par le traitement du givre.

De préférence, l'élément 52 comprend des moyens pour évacuer l'air chaud utilisé pour le traitement du givre dans le conduit 32.

Avantageusement, la direction du flux d'air chaud éjecté forme un angle avec la surface extérieure variant de 5 à 60°. De préférence, l'angle est compris entre 5 et 30° pour obtenir un bon compromis entre le refroidissement de l'air chaud et les perturbations du flux aérodynamique circulant dans le conduit.

Selon une première variante illustrée en détails sur la figure 4, l'élément 52 comprend à l'avant une plaque 56 se prolongeant vers l'avant assurant la liaison entre l'élément 52, le cadre avant 38 et la lèvre 36 et à l'arrière une plaque 58 se prolongeant vers l'arrière assurant la liaison entre l'élément 52 et le conduit 32 et plus particulièrement avec le panneau pour le traitement acoustique 44.

Selon cette variante, la face de la lèvre 36 et la face de la plaque avant 56 de l'élément 52 sont espacées au moins à certains endroits pour permettre le passage de l'air chaud depuis l'espace 50 jusque dans le conduit de la nacelle à l'intérieur duquel s'écoule l'air entrant.

Selon un mode de réalisation, la face de la lèvre 36 et/ou la face de la plaque avant 56 de l'élément 52 comprennent des formes en creux sous forme de rainures longitudinales formant une pluralité de canaux s'étendant depuis l'espace 50 jusque dans le conduit 32 de la nacelle.

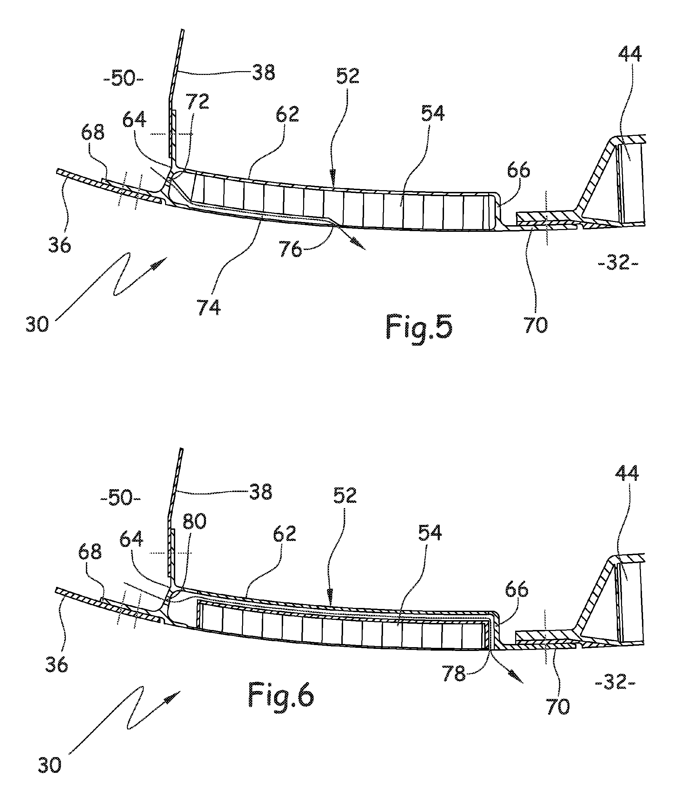

Comme montré sur les figures 5 et 6, l'élément 52 assure également la fonction d'élément de liaison entre le cadre avant 38 et la lèvre 36.

Selon un premier mode de réalisation illustré sur la figure 5, l'élément comprend une face arrière 62, à l'avant une première paroi 64 en forme sensiblement d'anneau disposée dans un plan sensiblement transversal dont l'extrémité est reliée par tous moyens appropriés au cadre avant 38 et à l'arrière une seconde paroi 66.

La première paroi 64 comprend un prolongement 68 vers l'avant de la nacelle relié par tous moyens appropriés à la lèvre 36.

La seconde paroi 66 comprend un prolongement 70 vers l'arrière de la nacelle relié par tous moyens appropriés au conduit 32 et notamment au revêtement 44 pour le traitement acoustique.

Selon la variante illustrée sur la figure 5, la face arrière 62 assure la fonction de couche réflectrice acoustique. Selon cette variante, les dimensions de l'élément 52, notamment sa hauteur, sont adaptées en fonction de la hauteur souhaitée du revêtement acoustique 54. Selon cette variante, la première paroi 64 comprend au moins un orifice 72 permettant de faire communiquer l'espace 50 avec au moins un canal 74 ménagé dans le revêtement pour le traitement acoustique 54, ledit canal 74 étant de préférence prévu entre la structure alvéolaire et la couche acoustiquement résistive, pour acheminer l'air chaud depuis l'orifice 72 jusqu'à au moins une sortie 76 ménagée au niveau de la couche acoustiquement résistive et éjecter l'air chaud dans le conduit 32 de la nacelle. A cet effet, au moins une paroi en U est intercalée entre la couche acoustiquement résistive et la structure alvéolaire de manière à délimiter avec ladite couche acoustiquement résistive un canal 74 et d'empêcher l'air chaud de pénétrer dans les cellules de ladite structure alvéolaire.

Selon la variante illustrée sur la figure 6, la face arrière 62 n'assure pas la fonction de couche réflectrice du revêtement pour le traitement acoustique 54. Selon cette variante, le revêtement pour le traitement acoustique 54 comprend de l'intérieur vers l'extérieur une couche réflectrice acoustique, au moins une structure alvéolaire, au moins une couche acoustiquement résistive, ladite couche réflectrice acoustique étant écartée de la paroi arrière 62 de manière à ménager un espacement autorisant le passage de l'air chaud, ce dernier étant évacué au niveau d'au moins une sortie 78 prévue à proximité de la seconde paroi 66, la première paroi 64 comportant un orifice 80 permettant de faire communiquer l'espace 50 et l'espace prévu entre la couche réflectrice et la paroi arrière 62. Selon ce mode de réalisation, des cloisons sont prévues au niveau des chants du revêtement 54 pour le traitement acoustique pour empêcher l'air chaud de pénétrer dans les cellules de la structure alvéolaire.

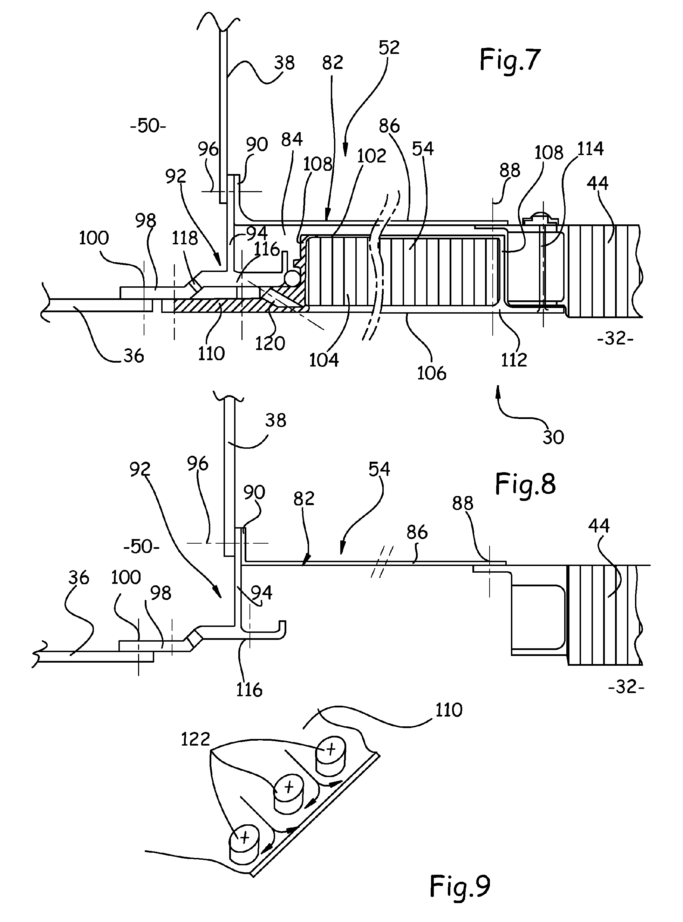

Sur les figures 7 à 9, on voit que l'élément 52 est réalisé en deux parties, une première partie 82 assurant la fonction mécanique et reliant la lèvre 36, le cadre avant 38 et le conduit 32 et une seconde partie dissociable de la première partie assurant la fonction du traitement acoustique.

La première partie 82 forme une cavité 84 ouverte en direction du conduit de la nacelle et susceptible de loger le revêtement pour le traitement acoustique dont la couche acoustiquement résistive ferme ladite cavité 84 et assure la continuité entre la lèvre 36 et la paroi du conduit 32.

Selon le mode de réalisation illustré, la première partie comprend une portion cylindrique 86 formant une paroi arrière dont le diamètre est supérieur à celui du conduit de la nacelle.

Cette portion cylindrique 86 est reliée par tous moyens 88 appropriés au conduit 32 et notamment au revêtement pour le traitement acoustique 44 en matériau composite.

Cette portion cylindrique 86 est reliée à l'avant au cadre avant 38 et à la lèvre 36. Selon un mode de réalisation, la portion cylindrique comprend un bord recourbé 90 s'étendant dans un plan sensiblement parallèle au cadre avant 38 et une pièce de jonction 92 est prévue entre le cadre avant 38, la lèvre 36 et la portion cylindrique 86. Cette pièce de jonction 92 comprend une première paroi 94 dans un plan radial dont un bord est intercalé entre le cadre avant 38 et le bord recourbé 90, ces trois élément étant reliés par tous moyens 96 appropriés (rivets, boulons ou autres), et un prolongement vers l'avant 98 relié par tous moyens 100 appropriés à la lèvre 36.

Sur la figure 8, on a représenté l'élément 52 sans revêtement acoustique 54. Ainsi, la première partie 82 assure la reprise des efforts mécaniques, si bien qu'il est éventuellement possible de démonter le revêtement acoustique 54 sans que les différents éléments, cadre avant 38, lèvre 36 et conduit 32 soient désolidarisés, ce qui contribue à simplifier la maintenance.

Selon un autre aspect de l'invention, le revêtement pour le traitement acoustique 54 étant moins sollicité sur le plan mécanique, il est possible de prévoir un revêtement pour le traitement acoustique 54 en plusieurs secteurs angulaires mis bout à bout et non reliés par des éclisses. Cette configuration a pour avantages de réduire la masse embarquée et d'optimiser la surface traitée sur le plan acoustique (celle-ci n'étant pas réduite en raison de la présence d'éclisses).

Comme précédemment, le revêtement acoustique 54 est métallique pour résister à des températures élevées (supérieures à celles supportées par le même élément réalisé en matériau composite).

Ce revêtement pour le traitement acoustique 54 comprend une couche réflectrice 102, distante de la portion cylindrique 86, au moins une structure alvéolaire 104 et au moins une couche acoustiquement résistive 106 assurant la continuité entre la lèvre 36 et le conduit 32.

Le fait de prévoir une couche réflectrice 102 espacée de la première partie 82 de l'élément de liaison 52 permet de créer une couche d'air isolante limitant la diffusion de la chaleur à l'arrière du cadre avant 38.

Le revêtement 54 peut être réalisé en plusieurs secteurs angulaires ou en une seule pièce.

De préférence, au moins les chants 108 disposés vers l'avant et l'arrière du revêtement sont délimités par des parois étanches.

Pour le solidariser au reste de la nacelle, le revêtement pour le traitement acoustique 54 comprend un prolongement 110 vers l'avant venant dans le prolongement de la lèvre ainsi qu'un prolongement 112 vers l'arrière pour solidariser par tous moyens 114 appropriés le revêtement métallique 54 au revêtement 44 en matériau composite.

Avantageusement, la pièce de jonction 92 comprend un prolongement vers l'arrière 116 dont l'extrémité est recourbée pour être sensiblement parallèle au chant 108 du revêtement acoustique 54.

Le prolongement 116 de la pièce de jonction 92 est distant du prolongement 110 du revêtement 54 pour permettre à l'air chaud de circuler entre au moins un orifice 118 ménagé au niveau du prolongement 98 vers l'avant de la pièce de jonction 92 et au moins un orifice 120 au niveau du prolongement 110 vers l'avant du revêtement 54, à proximité du chant avant 108 de manière à acheminer l'air chaud depuis l'espace 50 vers le conduit 32.

Comme illustré sur la figure 9, des bossages ou des cales 122 par exemple circulaires peuvent être prévus entre les prolongements 116 et 110 pour les maintenir espacés. De préférence, des moyens d'étanchéité sont intercalés entre l'extrémité recourbée du prolongement 116 de la pièce de jonction et le chant avant 108 du revêtement 54 afin de limiter la propagation de l'air chaud dans la cavité 84.

## Revendications

1. Nacelle d'aéronef comprenant une lèvre (36) prolongée à l'extérieur par une paroi périphérique (34) et à l'intérieur par un conduit (32), un cadre avant (38) reliant la zone de jonction de la lèvre (36) et de la paroi périphérique (34) et la zone de jonction de la lèvre (36) et du conduit (32), un espace (50) délimité par ledit cadre avant (38) et la lèvre (36) ainsi que des moyens pour insuffler de l'air chaud dans l'espace (50), le conduit (32) comportant un revêtement (44) pour le traitement acoustique en matériau composite, **caractérisée en ce que** la nacelle comprend au moins un élément (52) métallique disposé entre le cadre avant (38) et le revêtement (44) assurant la continuité des surfaces aérodynamiques de la lèvre (36) et du conduit (32) et la propagation de la chaleur par conduction depuis l'espace (50) vers l'arrière de la nacelle, ledit au moins un élément (52) comportant une première partie (82) assurant la fonction mécanique et reliant la lèvre (36), le cadre avant (38) et le conduit (32) et une seconde partie métallique dissociable de la première partie assurant la fonction du traitement acoustique.

2. Nacelle d'aéronef selon la revendication 1, **caractérisée en ce que** la première partie (82) comprend une portion cylindrique (86) dont le diamètre est supérieur à celui du conduit (32) de manière à former une cavité (84) ouverte en direction du conduit de la nacelle et susceptible de loger un revêtement pour le traitement acoustique (54) dont la couche acoustiquement résistive ferme ladite cavité (84) et assure la continuité entre la lèvre (36) et la paroi du conduit (32).

3. Nacelle d'aéronef selon la revendication 2, **caractérisée en ce que** la première partie (82) comprend une pièce de jonction (92) assurant la jonction entre la lèvre (36), le cadre avant (38) et la portion cylindrique (86).

4. Nacelle d'aéronef selon la revendication 2 ou 3, **caractérisée en ce que** le revêtement pour le traitement acoustique (54) comprend une couche réflectrice (102) distante de la portion cylindrique (86).

5. Nacelle d'aéronef selon la revendication 4, **caractérisée en ce que** le revêtement pour le traitement acoustique (54) comprend un prolongement (112) vers l'arrière pour le solidariser au revêtement (44) en matériau composite.

6. Nacelle d'aéronef selon la revendication 4 ou 5, **caractérisée en ce que** le revêtement pour le traitement acoustique (54) comprend un prolongement (110) vers l'avant venant dans le prolongement de la lèvre (36).

7. Nacelle d'aéronef selon la revendication 6, **caractérisée en ce que** la pièce de jonction (92) comprend un prolongement vers l'arrière (116) distant du prolongement (110) du revêtement (54) pour permettre à l'air chaud de circuler depuis l'espace (50) en direction du conduit (32) via au moins un orifice de sortie (120) au niveau du prolongement (110).

8. Nacelle d'aéronef selon la revendication 7, **caractérisée en ce que** des bossages ou des cales (122) sont prévus entre les prolongements (116, 110) de la pièce de jonction (92) et du revêtement (54) pour les maintenir espacés.

9. Nacelle d'aéronef selon la revendication 7 ou 8, **caractérisée en ce que** des moyens d'étanchéité sont intercalés entre le prolongement (116) de la pièce de jonction et le chant avant du revêtement pour le traitement acoustique (54).

## Patentansprüche

1. Gondel eines Luftfahrzeugs mit einem Wulst (36), der außen durch eine äußere Wand (34) und innen durch eine Zuführung (32) verlängert ist, mit einem vorderen Rahmen (38), der den Verbindungsbereich des Wulstes (36) und der äußeren Wand (34) und den Verbindungsbereich des Wulstes (36) und der Zuführung (32) verbindet, mit einem Raum (50), der durch den vorderen Rahmen (38) und den Wulst (36) begrenzt ist, und mit Mitteln, um warme Luft in den Raum (50) einzublasen, wobei die Zuführung (32) eine Verkleidung (44) aus Verbundmaterial für die Schallbehandlung umfasst, **dadurch gekennzeichnet, dass** die Gondel wenigstens ein metallisches Element (52) aufweist, das zwischen dem vorderen Rahmen (38) und der Verkleidung (44) angeordnet ist, das die Kontinuität der aerodynamischen Oberflächen des Wulstes (36) und der Zuführung (32) und die Wärmeableitung vom Raum (50) zum hinteren Bereich der Gondel gewährleistet, wobei das wenigstens eine Element (52) ein erstes Teil (82) aufweist, das die mechanische Funktion gewährleistet und den Wulst (36), den vorderen Rahmen (38) und die Zuführung (32) verbindet, und ein metallisches zweites Teil, das von dem ersten Teil trennbar ist und die Funktion der Schallbehandlung gewährleistet.

2. Gondel eines Luftfahrzeugs nach Anspruch 1, **dadurch gekennzeichnet, dass** das erste Teil (82) einen zylindrischen Abschnitt (86) aufweist, dessen Durchmesser größer als derjenige der Zuführung (32) ist, so dass eine Ausnehmung (84) gebildet ist, die in Richtung der Zuführung der Gondel offen ist und dazu eingerichtet ist, eine Verkleidung (54) für die Schallbehandlung aufzunehmen, deren schalldämmende Schicht die Ausnehmung (84) abschließt und die Kontinuität zwischen dem Wulst (36) und der Wand der Zuführung (32) gewährleistet.

3. Gondel eines Luftfahrzeugs nach Anspruch 2, **dadurch gekennzeichnet, dass** das erste Teil (82) ein Verbindungsstück (92) aufweist, das die Verbindung zwischen dem Wulst (36), dem vorderen Rahmen (38) und dem zylindrischen Abschnitt (86) gewährleistet.

4. Gondel eines Luftfahrzeugs nach Anspruch 2 oder 3, **dadurch gekennzeichnet, dass** die Verkleidung (54) für die Schallbehandlung eine im Abstand zum zylindrischen Abschnitt (86) angeordnete schallreflektierende Schicht (102) aufweist.

5. Gondel eines Luftfahrzeugs nach Anspruch 4, **dadurch gekennzeichnet, dass** die Verkleidung (54) für die Schallbehandlung eine sich nach hinten erstreckende Verlängerung (112) aufweist, um diese mit der Verkleidung (44) aus Verbundmaterial zu verbinden.

6. Gondel eines Luftfahrzeugs nach Anspruch 4 oder 5, **dadurch gekennzeichnet, dass** die Verkleidung (54) für die Schallbehandlung eine sich nach vorne erstreckende Verlängerung (110) aufweist, die sich in den Bereich der Verlängerung des Wulstes (36) erstreckt.

7. Gondel eines Luftfahrzeugs nach Anspruch 6, **dadurch gekennzeichnet, dass** das Verbindungsstück (92) eine sich nach hinten erstreckende Verlängerung (116) aufweist, die im Abstand zur Verlängerung (110) der Verkleidung (54) angeord-net ist, um die Zirkulation von warmer Luft vom Raum (50) in Richtung der Zuführung (32) über wenigstens eine Ausgangsöffnung (120) im Bereich der Verlängerung (110) zu gestatten.

8. Gondel eines Luftfahrzeugs nach Anspruch 7, **dadurch gekennzeichnet, dass** Abstandshalter oder Stützen (122) zwischen den Verlängerungen (116, 110) des Verbindungsstücks (92) und der Verkleidung (54) vorgesehen sind, um diese im Abstand zu halten.

9. Gondel eines Luftfahrzeugs nach Anspruch 7 oder 8, **dadurch gekennzeichnet, dass** Abdichtmittel zwischen der Verlängerung (116) des Verbindungsstücks und der vorderen Schmalseite der Verkleidung (54) für die Schallbehandlung eingefügt sind.

## Claims

1. Aircraft nacelle that comprises a lip (36) extended to the outside through a peripheral wall (34) and to the inside through a pipe (32) and a front frame (38) connecting the junction zone of the lip (36) and the peripheral wall (34) and the junction zone of the lip (36) and the pipe (32), a space (50) delimited by the front frame (38) and the lip (36) and means for providing hot air in the space (50), the pipe (32) comprising a coating (44) for acoustic treatment in composite material, **characterized in that** the nacelle comprises at least one metallic element (52) inserted between the front frame (38) and the coating (44) ensuring the continuity of the aerodynamic surfaces of the lip (36) and the pipe (32) and the propagation of heat from the space (50) toward the rear of the nacelle, whereby said at least one element (52) comprises a first part (82) that ensures the mechanical function and that connects the lip (36), the front frame (38), and the pipe (32), and a second part that can be dissociated from the first part that ensures the function of the acoustic treatment.

2. Aircraft nacelle according to Claim 1, wherein the first part (82) comprises a cylindrical portion (86) whose diameter is greater than that of the pipe (32) in such a way as to form a cavity (84) that is open in the direction of the pipe of the nacelle and able to house a coating (54) for acoustic treatment whose acoustically resistive layer closes said cavity (84) and ensures the continuity between the lip (36) and the wall of the pipe (32).

3. Aircraft nacelle according to Claim 2, wherein the first part (82) comprises a junction part (92) that ensures the junction between the lip (36), the front frame (38), and the cylindrical portion (86).

4. Aircraft nacelle according to Claim 2 or 3, wherein the coating (54) for acoustic treatment comprises a reflective layer (102) that is distant from the cylindrical portion (86).

5. Aircraft nacelle according to Claim 4, wherein the coating (54) for acoustic treatment comprises an extension (112) toward the rear for making it integral with the composite material coating (44).

6. Aircraft nacelle according to Claim 4 or 5, wherein the coating (54) for acoustic treatment comprises an extension (110) toward the front that comes into the extension of the lip (36).

7. Aircraft nacelle according to Claim 6, wherein the junction part (92) comprises an extension toward the rear (116) that is distant from the extension (110) of the coating (54) for making it possible for the hot air to circulate from the space (50) in the direction of the pipe (32) via at least one outlet opening (120) at the extension (110).

8. Aircraft nacelle according to Claim 7, wherein projections or wedges (122) are provided between the extensions (116, 10) of the junction part (92) and the coating (54) for keeping them spaced.

9. Aircraft nacelle according to Claim 7 or 8, wherein sealing means are inserted between the extension (116) of the junction part and the front edge of the coating (54) for acoustic treatment.
